(19) Europäisches Patentamt
European Patent Office
Office européen des brevets

(11) EP 1 333 298 A2

(12) # EUROPEAN PATENT APPLICATION

(43) Date of publication:
06.08.2003 Bulletin 2003/32

(51) Int Cl.7: G02B 5/28

(21) Application number: 03250386.4

(22) Date of filing: 22.01.2003

(84) Designated Contracting States:
AT BE BG CH CY CZ DE DK EE ES FI FR GB GR HU IE IT LI LU MC NL PT SE SI SK TR
Designated Extension States:
AL LT LV MK RO

(30) Priority: 25.01.2002 JP 2002017290
23.05.2002 JP 2002149736

(71) Applicant: ALPS ELECTRIC CO., LTD.
Ota-ku Tokyo 145 (JP)

(72) Inventors:
- Kitagawa, Hitoshi, Alps Electric Co.,Ltd. Tokyo (JP)
- Hatanai, Takashi, Alps Electric Co.,Ltd. Tokyo (JP)
- Umeda, Yuichi, Alps Electric Co.,Ltd. Tokyo (JP)
- Sakai, Shigefumi, Alps Electric Co.,Ltd. Tokyo (JP)

(74) Representative: Kensett, John Hinton
Saunders & Dolleymore,
9 Rickmansworth Road
Watford, Hertfordshire WD18 0JU (GB)

(54) **Multilayer film optical filter, method of producing the same, and optical component using the same**

(57) A multilayer film optical filter includes a multilayer film including a plurality of dielectric material thin films repeatedly laminated on a substrate and having different refractive indexes. The multilayer film optical filter further includes a relaxation layer composed of a single material, having a thickness in the range of 1 to 10 μm, and provided below the multilayer film near the substrate, for relaxing the influence of an error in thickness measurement due to a temperature rise of the substrate in an initial stage of deposition.

FIG. 1

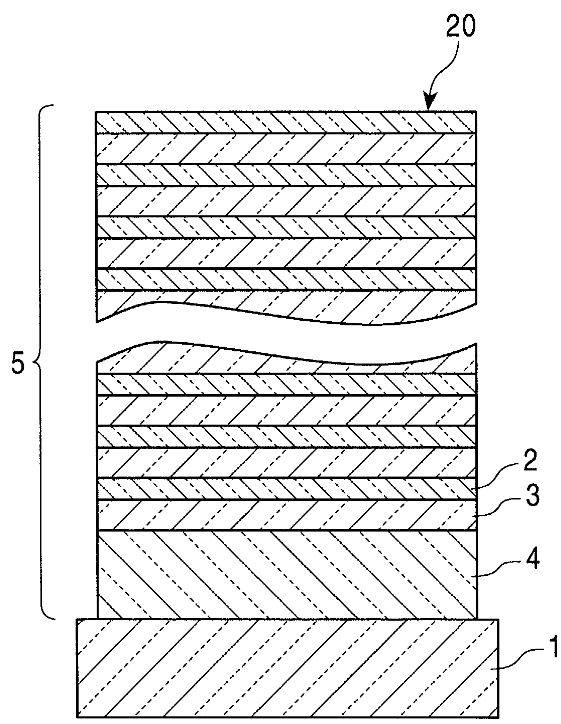


EP 1 333 298 A2

## Description

BACKGROUND OF THE INVENTION

1. Field of the Invention

The present invention relates to a multilayer film optical filter used as a bandpass filter, a gain-flattening filter, or the like, which transmits or reflects light at a specified wavelength. More particularly, the present invention relates to a multilayer film optical filter exhibiting a significant decrease in the influence of an error in thickness measurement due to a temperature rise of a substrate in an initial stage of deposition.

The present invention also relates to a multilayer film optical filter used for optical communication, and the like, a method of manufacturing the optical filter, and an optical communication module using the multilayer film optical filter.

2. Description of the Related Art

A multilayer film optical filter utilizes an interference phenomenon at each of the interfaces between laminated films, for achieving desired transmission or reflection of light in a target wavelength region. Fig. 12 shows an example of a generally used multilayer film optical filter 10, which comprises a tantalum oxide (referred to as "$Ta_2O_5$" hereinafter) layer as a high-refractive-index layer 12, and a silicon oxide (referred to as "$SiO_2$" hereinafter) layer as a low-refractive-index layer 13. Several tens to about 100 layers each of both layers are alternately laminated on a glass substrate 1.

The layers of each type of layer are designed so that the optical thicknesses thereof are in a range with a center at λ/4 of the wavelength λ of light to be passed or reflected. The "optical thickness" means a value defined by the product of a refractive index and a physical thickness (actual thickness). For example, for light at a wavelength of 1.55 μm used for optical communication, the actual thicknesses of the $Ta_2O_5$ layers are often distributed in a range of 0.05 to 0.8 μm with a center at 0.18 μm, and the actual thicknesses of the $SiO_2$ layers are often distributed in a range of 0.09 to 0.8 μm with a center at 0.26 μm.

In the multilayer film optical filter 10, in order to obtain a product having desired properties, it is important to precisely control the thickness of each layer, and to maintain a deviation from a design value in an allowable range. In application to the field of wavelength division multiplexing (WDM) which has recently been used in a wide range, high thickness precision is required, and a deviation from a design value must be kept in a range of 0.01 to 0.1%.

A multilayer film optical filter required to have high precision of thickness control is produced by a method of depositing each layer while measuring and monitoring the thickness during deposition by using an optical thickness measurement system. In this measurement system, the thickness of each layer is measured by measuring a quantity of light passing through each deposited layer, reflected by an interface, and then incident on a measurement device. However, light reflected by the back of the substrate and passing through the substrate is slightly mixed in the necessary light passing through each layer.

When the substrate has a constant thickness, a correct measurement can be obtained by subtracting light passing through the substrate. However, in an initial stage of deposition, energy is supplied to the substrate to gradually increase the temperature, and accordingly the substrate expands to increase the thickness. Therefore, the quantity of passing light varies as the thickness of the substrate increases from the start of deposition to the time when the substrate temperature is stabilized. However, in measurement of the thickness, it is difficult to precisely correct the thickness at each time of a change in the thickness of the substrate. Therefore, it is necessary to use the method of subtracting a value corresponding to the thickness of the substrate on the assumption that the thickness of the substrate is constant. As a result, an error occurs corresponding to a change in quantity of passing light to increase a deviation from a design value of the thickness of each layer near the substrate in the initial stage of deposition. There is thus the problem of deviating the properties of a product from desired ranges due to the influence of the deviation of the thickness.

A multilayer film optical filter used for an optical communication system is used as a bandpass filter (BPF), a gain flattening filter (GFF), an edge filter, or the like according to properties.

Fig. 11 shows an example of a configuration of an optical communication system using these filters. In Fig. 11, an optical signal transmitted from a home station A is relayed by a plurality of relay stations 101, and received by another home station B.

Each of the relay stations 101 comprises edge filters 102, 103 and 104 for separating input optical signals into a short-wavelength region, an intermediate wavelength region and a long wavelength region, respectively, by reflection and transmission, optical amplifiers 105, 106 and 107 for amplifying the signals in the respective wavelength regions, GFF 108, 109 and 110 for flattening the characteristics of the amplified signals, and edge filters 111, 112 and 113 for combining the flattened signals in the respective wavelength regions to output a signal.

The home station B comprises a plurality of BPFs 114, 115, 116, and 117 which reflect and transmit the input optical signal to output desired wavelengths λ1, λ2, λ3, λ4 and λ5.

Figs. 13A, 13B and 13C respectively show examples of wavelength-transmittance characteristics of the filters. Fig. 13A shows an example of the characteristics of an edge filter used as a high pass filter for separating an intermediate wavelength region (C band) from a short wavelength region (S band). Fig. 13B shows the transmission property of GFF designed for amplification gain of the optical amplifier used, and Fig. 13C shows an example of the transmission property of BPF with respect to the wavelength of input light.

Such a multilayer film optical filter has a structure in which a thin film of a high-index material (e.g., $Ta_2O_5$, $TiO_2$, $ZrO_2$, or the like) and a thin film of a low-index material (e.g., $SiO_2$, $MgF_2$, or the like) are alternately laminated on a transparent substrate of glass or the like. Each of the high-index material and low-index material thin films is formed by a deposition apparatus using an ion assisted deposition apparatus (IAD), an ion beam sputtering apparatus (IBS), or the like. In order to obtain a filter having excellent performance, the thickness (referred to as an "optical thickness" hereinafter) of a film must be precisely controlled during deposition. Therefore, the deposition apparatus uses an optical monitor for measuring the thickness of a film during deposition by utilizing light transmission and reflection characteristics.

The multilayer film optical filter includes a filter having an ordered film structure, and a filter disordered film structure. The term "ordered film structure" means a film structure in which assuming that a wavelength in the wavelength region used by the filter is λ, the thickness of each of layers is an integral multiple of λ/4. The term "disordered film structure" means a film structure in which the thickness of at least one layer is a non-integral multiple of λ/4, for example, 1.5000 or 1.003 times of λ/4. An example of a filter comprising only films having the ordered structure is BPF, and examples of a filter comprising a film having the disordered structure include GFF and a high-precision edge filter.

A filter such as BPF, which comprises the ordered film structure, is formed by depositing films while transmitting light at a specified wavelength λ used for its design to monitor changes in transmittance during film deposition. Fig. 14A shows an example of monitoring results. As shown in Fig. 14A, a peak of transmittance appears when the thickness becomes an integral multiple of λ/4 based on the wavelength λ of the measuring light. Therefore, the peak is considered as an end point of deposition of a high-index material or low-index material, permitting high-precision thickness control.

On the other hand, a filter such as GFF or a high-precision edge filter, which comprises the disordered film structure, is formed by depositing films while monitoring the thickness by the same method as described above. However, as shown in Fig. 14B, a target thickness is not necessarily achieved at a transmittance peak during film deposition. Therefore, in a conventional method, periodical changes of transmittance of the measuring light of a filter is monitored during deposition to obtain data, and changes in the data are subjected to fitting to estimate an end point of deposition at which deposition is finished. When deposition by the deposition apparatus stably proceeds, and the data on transmittance changes obtained based on the measuring light is stable, this method permits precise fitting for determining the end point, and permits high-precision thickness control.

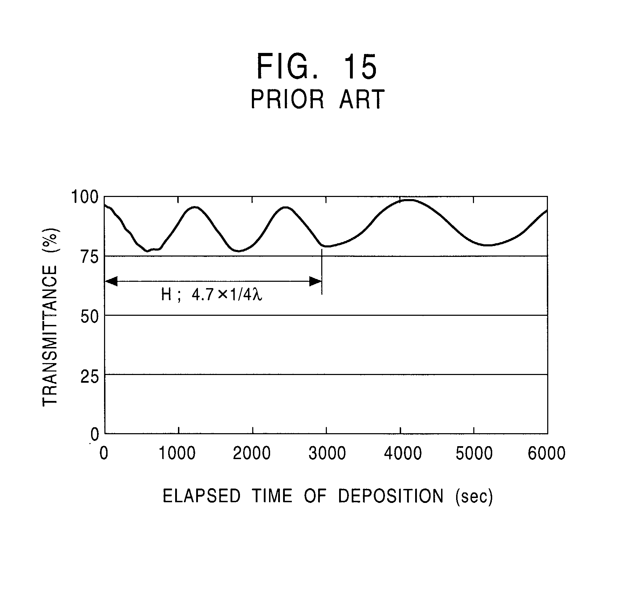

However, when the thickness is controlled by the fitting, changes in transmittance of the measuring light are disturbed due to, for example, an unstable temperature of a substrate, unstable operations of a sputter gun and assist gun in the deposition apparatus, unstable conditions in a chamber, etc. in the initial stage of deposition, as shown in Fig. 15. Therefore, the fitting for determining the end point exhibits low precision, and thus has the problem of failing to precisely control the thickness of an initial layer during deposition.

## SUMMARY OF THE INVENTION

The present invention has been achieved for solving the above problem, and an object of the present invention is to provide a multilayer film optical filter comprising a relaxation layer provided as a lower layer near a substrate, for absorbing a temperature change to relax the influence of the change, so that the influence of an error in thickness measurement in an initial stage of deposition on the properties of the filter is decreased to a negligible level.

Another object of the present invention is to improve the precision of thickness control in an unstable period of the initial stage of deposition for forming a filter having a disordered film structure.

In order to achieve the objects, a multilayer film optical filter of the present invention comprises a substrate, a multilayer film including a plurality of dielectric material thin films repeatedly laminated and having different refractive indexes, and a relaxation layer made of a single material and provided below the multilayer film near the substrate, for relaxing the influence of an error in thickness measurement due to a temperature change.

In the filter, a temperature rise of the substrate in the initial stage influences only the relaxation layer, and thus an error in thickness measurement due to a temperature change has a negligible influence on the properties of the filter, thereby achieving desired properties.

The thickness of the relaxation layer is preferably in the range of 1 to 10 μm. The lower limit 1 μm of the thickness is sufficient to relax the influence of an initial temperature rise in most of deposition apparatuses. With a thickness of less than 1 μm, it is estimated that the substrate temperature increases during deposition of the relaxation layer. While with a thickness of over the upper limit 10 μm, the necessary deposition time is increased, and the influence on the initial properties of the optical filter is undesirably increased.

The relaxation layer is preferably positioned in a lowermost layer in contact with the substrate, and comprises either a high-index layer or a low-index layer. The relaxation layer can be formed only by slightly changing conditions for producing the filter using an ordinary producing apparatus without using a special material for the relaxation layer, thereby facilitating the production of the filter.

The material of the high-index layer may be either tantalum oxide ($Ta_2O_5$) or titanium oxide ($TiO_2$), and the material of the low-index material may be silicon oxide ($SiO_2$). These materials exhibit stable physical properties as a thin layer, and are suitable as constitutive materials.

In the multilayer film optical filter of the present invention, the optical thickness d of the relaxation layer based on the wavelength λ of incident light may be as follows:

$$d = 2m(\lambda/4)$$

(m is a positive integer)

The filter must be designed in consideration of the presence of the relaxation layer because the relaxation layer influences the filter properties to some extent. However, when the above thickness condition is satisfied, the relaxation layer less influences the filter properties. Namely, in design, the relaxation layer need not be taken into consideration, and thus a design range is extended. Particularly, in designing a bandpass filter, the effect of extending the design range is increased.

A method of producing a multilayer film optical filter of the present invention comprises a first step of forming a relaxation layer on a surface of a substrate, for relaxing the influence of an error in thickness measurement due to a temperature change, and a second step of alternately laminating two dielectric material thin films having different refractive indexes on the upper surface of the relaxation layer. The first step is continuously performed until the initial temperature of the substrate increases to a substantially stationary value, and the second step is performed at the substantially stationary temperature after the first step.

In this production method, an error in thickness measurement due to a temperature change in an initial stage of deposition occurs only in the relaxation layer having less influence on the properties of the filter, thereby achieving the multilayer film optical filter having desired properties.

An optical component of the present invention comprises the above-described multilayer film optical filter causing less deviation from a design value, and thus has stable performance as a component.

In another aspect of the present invention, a multilayer film optical filter comprises a substrate and a multilayer film formed on the substrate, wherein the multilayer film comprises a first deposited layer formed on the surface of the substrate, and a second deposited layer formed on the first deposited layer. The first deposited layer comprises at least one sub-layer having a thickness of an integral multiple of λ/4 based on a predetermined wavelength λ, and the second deposited layer comprises at least one sub-layer having a thickness of a non-integral multiple of λ/4 based on the wavelength λ.

In the multilayer film optical filter of the present invention, the wavelength λ may be in the wavelength region used by the multilayer film optical filter.

Furthermore, in the multilayer film optical filter of the present invention, the first deposited layer may comprise a plurality of deposited sub-layers each having a thickness of an integral multiple of λ/4 based on the wavelength λ.

Therefore, the multilayer film optical filter of the present invention comprises a layer formed in an unstable period of the initial stage to have a thickness of an integral multiple of λ/4 based on the wavelength λ of measuring light. In this case, a peak point of transmittance changes in the deposition of an initial layer (only a first layer formed on the surface of the substrate or a predetermined number of layers from the first layer) on the substrate can be considered as an end point of deposition, thereby permitting the high-precision deposition of the initial layer. Furthermore, a layer having a thickness of a non-integral multiple of λ/4 based on the wavelength λ of measuring light is formed in the subsequent stable period, facilitating the estimation of the thickness by fitting. Therefore, each of the layers can be precisely formed on the substrate to cause the effect of producing an optical filter having properties corresponding to the design properties.

An optical communication module of the present invention comprises an optical processing unit comprising the above-described multilayer film optical filter, and at least one optical element optically coupled to the multilayer film optical filter, wherein the optical processing unit has an entrance port for incident light, and an emission port for emitted light.

In the optical communication module of the present invention, the optical element may be a photoamplifier, an output gain of the photoamplifier being flattened by the multilayer film optical filter.

Therefore, the optical communication module of the present invention uses the multilayer film optical filter formed with high precision, and thus a GFF filter can be easily obtained according to a design for flattening an output gain of a photoamplifier.

In a further aspect of the present invention, a method of producing a multilayer film optical filter of the present invention comprises the step of forming, on a substrate, a first deposited layer comprising at least one layer having a thickness of an integral multiple of λ/4 based on a predetermined wavelength λ, and the step of forming, on the first deposited layer, a second deposited layer comprising at least one layer having a thickness of a non-integral multiple of λ/4 based on the wavelength λ.

In the method of producing the multilayer film optical filter of the present invention, the wavelength λ may be in the wavelength region used by the multilayer film optical filter.

Furthermore, in the method of producing the multilayer film optical filter of the present invention, light at the predetermined wavelength λ may be used as monitoring light (measuring light) for measuring a quantity of the monitoring light passing through or reflected from each layer to determine the thickness of a layer during deposition.

Therefore, in the method of producing the multilayer film optical filter of the present invention, a first layer is formed on the surface of the substrate in an unstable period of the initial stage to have a thickness of an integral multiple of λ/4 based on the wavelength λ of the measuring light. In this case, a peak point of transmittance changes in the deposition of the layer on the substrate can be considered as an end point of the deposition, thereby permitting the high-precision deposition of the first layer.

Furthermore, in the method of producing the multilayer film optical filter of the present invention, a layer having a thickness of a non-integral multiple of λ/4 based on the wavelength λ of the measuring light is formed in the subsequent stable period, facilitating the estimation of the thickness by fitting. Therefore, each of the layers can be precisely formed on the substrate to produce an optical filter having properties corresponding to the design properties.

BRIEF DESCRIPTION OF THE DRAWINGS

Fig. 1 is a drawing showing a film structure of a multilayer film optical filter according to an embodiment of the present invention;

Figs. 2A and 2B are sectional views showing steps of a method of producing a multilayer film optical filter according to the present invention;

Fig. 3 is a graph showing changes of a substrate temperature in a method of producing a multilayer film optical filter according to the present invention;

Fig. 4 is a graph showing transmittance properties of multilayer film optical filters of an embodiment of the present invention and a conventional example;

Fig. 5 is a sectional view showing the construction of an optical filter module using a multilayer film optical filter according to an embodiment of the present invention;

Fig. 6 is a sectional side view showing a multilayer film optical filter according to an embodiment of the present invention;

Fig. 7 is a drawing showing the construction of a deposition apparatus according to an embodiment of the present invention;

Fig. 8 is a graph showing changes in transmittance of monitoring light with proceeding of the deposition of four ordered layers of λ/4;

Figs. 9A and 9B are graphs showing changes of transmittance in design and actual measurement of GFF according to the present invention and conventional GFF, respectively;

Figs. 10A and 10B are graphs showing changes of transmittance in design and actual measurement of an edge filter according to the present invention and a conventional edge filter, respectively;

Fig. 11 is a block diagram showing an example of an optical communication system using a multilayer film optical filter;

Fig. 12 is a sectional view showing a film structure of a conventional multilayer film optical filter;

Figs. 13A, 13B and 13C are graphs respectively showing examples of wavelength-transmittance characteristics of an edge filter, GFF and BPF;

Figs. 14A and 14B are graphs showing changes in transmittance of multilayer film optical filters respectively having a film structure in which a thickness is an integral multiple of λ/4 and a film structure in which a thickness is a non-integral multiple of λ/4, based on the wavelength λ of measuring light; and

Fig. 15 is a graph showing disturbances in changes of transmittance of a multilayer film optical filter having a film structure in which a thickness in an initial stage of deposition is a non-integral multiple of λ/4 based on the wavelength λ of measuring light.

DESCRIPTION OF THE PREFERRED EMBODIMENTS

An embodiment of the present invention will be described below with reference to Figs. 1 and 2. Fig. 1 shows a film structure of a multilayer film optical filter 20 according to a first embodiment of the present invention. The multilayer film optical filter 20 is designed and manufactured as a gain flattening filter for optical communication adapted to light at a wavelength of 1.55 μm.

In this embodiment, a relaxation layer 4 is provided in a lowermost layer in contact with a glass substrate of 6 μm in thickness, for relaxing the influence of an error in thickness measurement. Also, 35 layers each (a total of 70 layers) of two layers (low-index layer 3 and high-index layer 2) having different refractive indexes are laminated on the relaxation layer 4 to form a multilayer film 5. The high-index layer 2 is composed of $Ta_2O_5$ (refractive index 2.05), and the low-index layer 3 is composed of $SiO_2$ (refractive index 1.46). The material of the relaxation layer 4 is the same ($Ta_2O_5$) as the high-index layer 2, and the thickness is 1.5 μm.

In the multilayer film optical filter 20 of this embodiment, each of thin layers is formed by ion beam sputtering (IBS). Namely, two targets of tantalum (Ta) and silicon (Si) are placed in a vacuum chamber, and oxygen is supplied as a reaction gas to deposit a thin layer of each oxide on a substrate 1. Also, a thickness measuring means is disposed in a deposition apparatus, for monitoring the thickness of a layer during deposition. In the deposition, one of the two targets is selected, and is then switched to the other target when a predetermined thickness is achieved. This operation is repeated a predetermined number of times to obtain the desired multilayer film optical filter 20.

Figs. 2A and 2B are cross-sectional views respectively showing the film structures in steps of the above-described manufacturing method. Fig. 2A shows a state in which the first step of depositing the relaxation layer 4 composed of $Ta_2O_5$ is completed. Fig. 2B shows a state in which first two layers are deposited in the second step of repeatedly laminating the two layers (the low-index layer 3 and the high-index layer 2) having different refractive indexes. Thereafter, the low-index layer 3 and high-index layer 2 are alternately laminated under the same conditions as described above to finally form the structure shown in Fig. 1.

In the deposition apparatus used for manufacturing the multilayer film optical filter 20, the time required for forming the relaxation layer 4 is about 5 hours, but the substrate temperature increases by about 14°C from an initial temperature, and is then stabilized. Fig. 3 shows changes in the substrate temperature. The substrate temperature increases in the same manner as in the manufacture of a multilayer film optical filter 10 of a conventional example shown in Fig. 12 using the deposition apparatus under the same operating conditions (ion beam output, a degree of vacuum, a gas flow rate, etc.). The thickness of the substrate increases by about 0.7 μm with the temperature rise, and thus an error in the thickness measured by a quantity of passing light is estimated to at most 5%. Like in a conventional example, when each layer is deposited to a thickness of λ/4 in the period of the temperature rise, at least several layers are laminated in this period, and thus interference conditions at the interfaces between the respective layers are different from design values. Therefore, the characteristics of the filter are greatly deviated from the design values.

The multilayer film optical filter 20 of the present invention comprises the relaxation layer 4 having a thickness of 1.5 μm and formed as the lowermost layer in contact with the substrate 1. In addition, in the multilayer film optical filter 20, an error occurs in thickness measurement due to a change in the thickness of the substrate. However, the error decreases as the temperature comes close to a stationary value, and thus the error is about 0.1% with a thickness of 1.5 μm. Also, an interface is absent to cause no interference phenomenon, thereby causing less influence on the filter performance even when a thickness of 1.5 μm changes by about 0.1%.

Fig. 4 shows an example of the transmittance property of the resultant multilayer film optical filter in comparison with a conventional example. In Fig. 4, the transmittance property of a designed multilayer film optical filter, i.e. a design value, is shown by a dotted line, and the transmittance properties of multilayer film optical filters of the conventional example and the present invention are plotted by ▲ and ○. The conventional example has the same structure as in Fig. 1 except that the relaxation layer 4 is not provided.

In the conventional example (▲), the wavelength is shifted by about 5 nm from the design value to the long wavelength side due to the above-described error in thickness measurement in the initial stage. According to simulation of the transmittance property, the line of ▲ substantially corresponds to an estimated case in which the thickness of each of several layers deposited in the initial stage varies by about 5%, and then matches with the design value. On the other hand, in the multilayer film optical filter 20 (○) of the present invention, a shift of the wavelength falls within 0.1 nm, and the wavelength substantially coincides with the design value. It is estimated from these results that an error in the thickness of each layer formed on the relaxation layer 4 falls within 0.05%. Namely, in the initial stage, an error in the thickness occurs only in the relaxation layer 4, and the thickness of the relaxation layer 4 is set so that the error does not influence the transmittance property. It is thus confirmed that the multilayer film optical filter 20 has substantially no deviation from the design values.

Fig. 5 shows an optical filter module 30 as an example of an optical component using the multilayer film optical filter 20 of the present invention, the optical filter modules 30 comprising a combination of an optical fiber 32 and lenses 31. The filter 20 can be disposed in the same manner as in a conventional example.

Another embodiment of the present invention will be described below with reference to the drawings.

Fig. 7 is a drawing showing a construction of a deposition apparatus according to an embodiment. In Fig. 7, reference numeral 120 denotes a chamber; reference numeral 121, a transparent substrate (glass substrate) on which a multilayer film optical filter is formed; reference numeral 122, a gas supply device for supplying a predetermined gas for depositing a film into the chamber 120; reference numeral 123, a sputtering gun; reference numeral 124, a target composed of a constituent material of a film to be deposited on the substrate 121; reference numeral 125, an assist gun for applying an ion beam to the surface of the substrate 121 to improve film quality; reference numeral 126, a light source which emits measuring light at a predetermined wavelength λ; reference numeral 127, a mirror which reflects the measuring light emitted from the light source 126 and transmits the reflected light through the substrate 121; reference numeral 128, a mirror which reflects the measuring light passing through the substrate 121 and a layer deposited thereon; and reference numeral 129, an optical monitor for measuring a change in quantity of the measuring light reflected from the mirror 128.

As the wavelength of the measuring light, the same wavelength as an initial layer (including the first layer) deposited on the surface of the substrate 121 is selected from the wavelength region of the layers constituting the multilayer film optical filter.

Fig. 6 schematically shows the structure of a multilayer film optical filter according to another embodiment of the present invention. As shown in Fig. 6, an ordered layer 131 (comprising a plurality of films each having a thickness of an integral multiple of λ/4 based on the wavelength λ of the measuring light) is provided as the initial layer on the surface of the substrate 121. The ordered layer 131 comprises a plurality of ordered films (each having a thickness of an integral multiple of λ/4 based on the wavelength λ of the measuring light). Namely, the ordered layer 131 comprises the thin films each having a thickness of an integral multiple of λ/4 based on the wavelength λ of the measuring light which is selected from the wavelength region used by the multilayer film optical filter to be formed. Therefore, in a multilayer film, the thickness of each layer to be deposited on the surface of the substrate 121 is previously set to an integral multiple of λ/4 based on the wavelength λ of the used measuring light.

Furthermore, in the embodiment shown in Fig. 6, the ordered layer 131 comprises a plurality of thin films which are formed by alternately depositing a high-index material ($TiO_2$, $Ta_2O_5$, $ZrO_2$, or the like) and a low-index material ($SiO_2$, $MgF_2$, or the like). However, the ordered layer 131 may comprise a single thin film provided by using a high-index material or low-index material.

Furthermore, a disordered layer 132 (second deposited layer) is provided on the ordered layer 131. The disordered layer 132 comprises a plurality of films including the above-described disordered film. Namely, the disordered layer 132 comprises several tens of thin films including a layer having a thickness of a non-integral multiple of λ/4 based on the wavelength λ of the measuring light which is selected from the wavelength region used by the multilayer film optical filter. The disordered layer 132 is formed by alternately laminating a high-index material and a low-index material.

Besides the ordered layer 131 as the initial layer, another ordered layer may be provided on the disordered layer 132, or at least one ordered layer may be sandwiched between the thin films of the disordered layer 132. As the disordered layer 132, at least one layer may be provided.

In the above-described structure, the ordered layer 131 is deposited in the unstable period of the initial stage, and thus a peak point of changes in transmittance of the measuring light passing through the substrate 121, which are measured by the optical monitor 129, can be used as an end point of deposition. Therefore, in the configuration of the multilayer film optical filter of the present invention, the ordered layer 131 can be formed on the surface of the substrate 121 with high thickness precision. Also, the disordered layer 132 is formed in the stable period after the formation of the ordered layer 131, and thus the thickness of the disordered layer 132 can be easily estimated by fitting, thereby securely determining the end point of deposition and permitting high-precision thickness control.

The thickness of the ordered layer 131, and the number of the films of the ordered layer 131 are set based on the time required for depositing each film, and the length of the unstable period peculiar to the manufacturing apparatus used, i.e., the time from the start of deposition to the stable period of the deposition condition.

A description will now be made of an example of experimental manufacture of GFF according to the present invention.

In the experimental manufacture, four ordered layers 131 were deposited, and the thickness of each layer was λ/4. Also, $Ta_2O_5$ and $SiO_2$ were used as the high-index material and the low-index material, respectively, and were alternately deposited by an ion beam sputtering apparatus. Furthermore, light at a wavelength λ of 1545 nm was used as monitoring light for the thickness, and the thickness of each layer was measured directly based on the wavelength λ.

Fig. 8 shows changes in transmittance of the monitoring light for the substrate 121 with proceeding of deposition in accordance with this embodiment.

As shown in Fig. 8, data is disturbed due to the influence of instability in the initial stage of deposition. However, in the initial stage, the ordered layers 131 are formed, and thus the peak point of changes in transmittance can be considered as the end point of deposition. As a result, a high-precision GFF could be formed, in which the results of actual measurement sufficiently coincided with the design values, as shown in Fig. 9A.

For comparison, Fig. 9B shows the results of experimental manufacture of conventional GFF comprising layers all of which were disordered without employing the present invention. As shown in Fig. 9B, the results of actual measurement greatly deviate from the design values. As a result of analysis of the deviation, it was found that the deviation was mainly due to a thickness error of about 3 to 4% caused in the layer formed in the unstable period of the initial stage.

A description will now be made of an example of experimental manufacture of an edge filter according to the present invention.

In the experimental manufacture, one ordered layer 131 was deposited, and the thickness was 5 times as large as λ/4. Fig. 10A shows the results of the experimental manufacture. As a result, a high-precision edge filter could be formed, in which the results of actual measurement sufficiently coincided with the design values, as shown in Fig. 10A.

For comparison, Fig. 10B shows the results of experimental manufacture of a conventional edge filter comprising layers all of which were disordered without employing the present invention. As shown in Fig. 10B, the results of actual measurement greatly deviate from the design values. As a result of analysis of the deviation, it was found that the thickness of the layer deposited in the initial unstable period was about 2 to 3% larger than the design.

According to the results of the experimental manufacture of the GFF and the edge filter, it was confirmed that when the thickness of a layer to be formed in the unstable period of the initial stage of deposition is an integral multiple of λ/4 based on the wavelength λ of the measuring light, the end point of deposition can be determined by detecting a peak, thereby decreasing an error in the thickness of the initial layer, and exhibiting a desirable effect on the manufacture of an optical filter.

A description will now be made of an optical communication module according to a further embodiment of the present invention.

In an optical communication module using the above-described multilayer film optical filter as a high-precision GFF according to an embodiment of the present invention, for example, GFF is optically coupled to an optical element such as a photoamplifier or the like to form an optical processing unit, and an entrance port for incident light, and an emission port for emitted light, which has been optically processed, are provided on the optical processing unit.

In a still further embodiment of the present invention, an optical communication module comprising the above-described multilayer film optical filter used as each of a high-precision GFF and edge filter is used as, for example, a relay station 101 for relaying an optical signal between home stations A and B in the optical communication system shown in Fig. 11.

In Fig. 11, reference numerals 114, 115, 116 and 117 each denote a bandpass filter BPF comprising a multilayer film bonded to a medium. For example, optical signals at wavelengths λ1 to λ5 are input to the optical BPFs 114, 115, 116 and 117, and separated into λ1, λ2, λ3, λ4, and λ5 by the BPFs 114, 115, 116, and 117.

Therefore, the input optical signals having a plurality of wavelengths are separated into the optical signals having the respective wavelengths by the optical BPFs.

In optical communication, a Z filter (edge filter) and GFF each comprising an optical filter are used in a relay station for amplifying damped light strength when a transmitted optical signal is damped, as shown in Fig. 11.

In each of the Z filters 102, 103 and 104, reflectance of light at a predetermined wavelength is controlled to control transmission of an optical signal at each wavelength. For example, the Z filter 102 has high reflectance for C-band and L-band wavelengths so that only an optical signal at a S-band wavelength is transmitted and input to a fiber amplifier (photoamplifier corresponding to a S-band wavelength) 105. The Z filter 103 has high reflectance for S-band and C-band wavelengths so that only a L-band optical signal is transmitted.

Although the Z filter 103 inputs optical signals at S-band and C-band wavelengths to a fiber amplifier 106 (corresponding to a C-band wavelength), only the C-band optical signal is substantially input to the fiber amplifier 106 because the S-band light is incident on the fiber amplifier 105 by the Z filter 102.

The Z filter 104 has high reflectance for S-band, C-band and L-band wavelengths so as to reflect S-band, C-band and L-band optical signals. The "S band" means an optical signal in the wavelength band of 1450 to 1485 nm, the "C band" means an optical signal in the wavelength band of 1530 to 1560 nm, and the "L band" means an optical signal in the wavelength band of 1565 to 1610 nm.

The fiber amplifiers 105, 106 and 107 amplify optical signals at the S-band, C-band, and L-band wavelengths, respectively, but a gain varies with the wavelength in each of the bands. For example, as shown in Fig. 13B, the characteristics of gain of the fiber amplifier 106 are not flat, and vary with the wavelength. Therefore, the GFFs 108, 109 and 110 each comprising an optical filter have the gain characteristics opposite to those of the fiber amplifier 106, as shown in Fig. 13B, and the GFFs 108, 109 and 110 are used for flattening light strength amplified by the fiber amplifiers 105, 106 and 107, respectively.

As described above, in the multilayer film optical filter 20 of the present invention, an error in thickness measurement occurs only in the relaxation layer 4 in the initial stage of deposition. Namely, the influence of the error is relaxed by the relaxation layer 4, and the thickness of the relaxation layer 4 is set in a range causing no influence on filter properties. Consequently, the thickness of each layer laminated on the relaxation layer 4 is set in a predetermined range, thereby realizing filter characteristics having substantially no deviation from design values.

The method of producing the multilayer film optical filter of the present invention is capable of easily and precisely obtaining the multilayer film optical filter 20 having characteristics with substantially no deviation from the design value.

In the present invention, a layer having a thickness of an integral multiple of λ/4 is formed in the unstable period of the initial stage, and thus a peak of changes in transmittance (or reflectance) based on the measuring light passing through a substrate can be considered as an end point of deposition, thereby permitting the formation of the layer with high thickness precision. Also, a layer having a thickness of a non-integral multiple of λ/4 is then formed in the stable period, thereby facilitating the estimation of the thickness by fitting to permit high-precision thickness control. Therefore, the present invention is capable of obtaining GFF and an edge filter with high precision.

Furthermore, the wavelength λ is a predetermined wavelength in the wavelength region used by a multilayer film optical filter, thereby permitting thickness control with higher precision.

The present invention also can provide an optical communication module having a high-precision GFF.

## Claims

1. A multilayer film optical filter comprising a substrate, a multilayer film above a surface of the substrate, the multilayer film including a plurality of dielectric material thin films repeatedly laminated and having different refractive indexes, and a relaxation layer composed of a single material and provided in a bottom portion of the multilayer film near the substrate, for relaxing the influence of an error in thickness measurement due to a temperature change.

2. A multilayer film optical filter according to claim 1, wherein the thickness of the relaxation layer is in the range of 1 to 10 μm.

3. A multilayer film optical filter according to claim 2, wherein the dielectric thin films include high-index layers and low-index layers that are alternately laminated, and the relaxation layer is provided as a lowermost layer in contact with the substrate and comprises either of the two types of the dielectric materials.

4. A multilayer film optical filter according to claim 3, wherein the high-index layer is composed of either tantalum oxide ($Ta_2O_5$) or titanium oxide ($TiO_2$), and the low-index material is composed of silicon oxide ($SiO_2$).

5. A multilayer film optical filter according to claim 3 or 4, wherein the optical thickness d of the relaxation layer based on the wavelength λ of incident light is as follows:

$$d = 2\ m\ (\lambda/4)$$

(m is a positive integer)

6. A method of producing a multilayer film optical filter comprising a first step of forming a relaxation layer on a surface of a substrate, for relaxing the influence of an error in thickness measurement due to a temperature change, and a second step of alternately laminating thin films of two dielectric materials having different refractive indexes on the upper surface of the relaxation layer, wherein the first step is continuously performed until the initial temperature of the substrate increases to a substantially stationary value, and the second step is performed at the substantially stationary value after the first step.

7. An optical component comprising a multilayer film optical filter according to any of claims 1 to 5.

8. A multilayer film optical filter comprising a substrate and a multilayer film formed on a surface of the substrate, wherein the multilayer film comprises a first deposited layer formed on the surface of the substrate, and a second deposited layer formed on the first deposited layer, wherein the first deposited layer comprises at least one sub-layer having a thickness of an integral multiple of λ/4 based on a predetermined wavelength λ, and the second deposited layer comprises at least one sub-layer having a thickness of a non-integral multiple of λ/4 based on the wavelength λ.

9. A multilayer film optical filter according to claim 8, wherein the wavelength λ is within a wavelength region used by the multilayer film optical filter.

10. A multilayer film optical filter according to claim 8 or 9, wherein the first deposited layer comprises a plurality of deposited layers each having a thickness an integral multiple of λ/4 based on the wavelength λ.

11. An optical communication module comprising an optical processing unit comprising a multilayer film optical filter according to any of claims 8 to 10, and at least one optical element optically coupled to the multilayer film optical filter, wherein the optical processing unit has an entrance port for incident light, and an emission port for emitted light.

12. An optical communication module according to claim 11, wherein the optical element is a photoamplifier, an output gain of the photoamplifier being flattened by the multilayer film optical filter.

13. A method of producing a multilayer film optical filter comprising the step of forming, on a surface of a substrate, a first deposited layer comprising at least one sub-layer having a thickness of an integral multiple of λ/4 based on a predetermined wavelength λ, and the step of forming, on the first deposited layer, a second deposited layer comprising at least one sub-layer having a thickness of a non-integral multiple of λ/4 based on the wavelength λ.

14. A method of producing a multilayer film optical filter according to claim 13, wherein the wavelength λ is within the wavelength region used by the multilayer film optical filter.

**15.** A method of producing the multilayer film optical filter according to claim 13 or 14, wherein light at the predetermined wavelength λ is used as monitoring light for measuring a quantity of the monitoring light passing through or reflected from each layer to determine the thickness of the layer during deposition.

FIG. 1

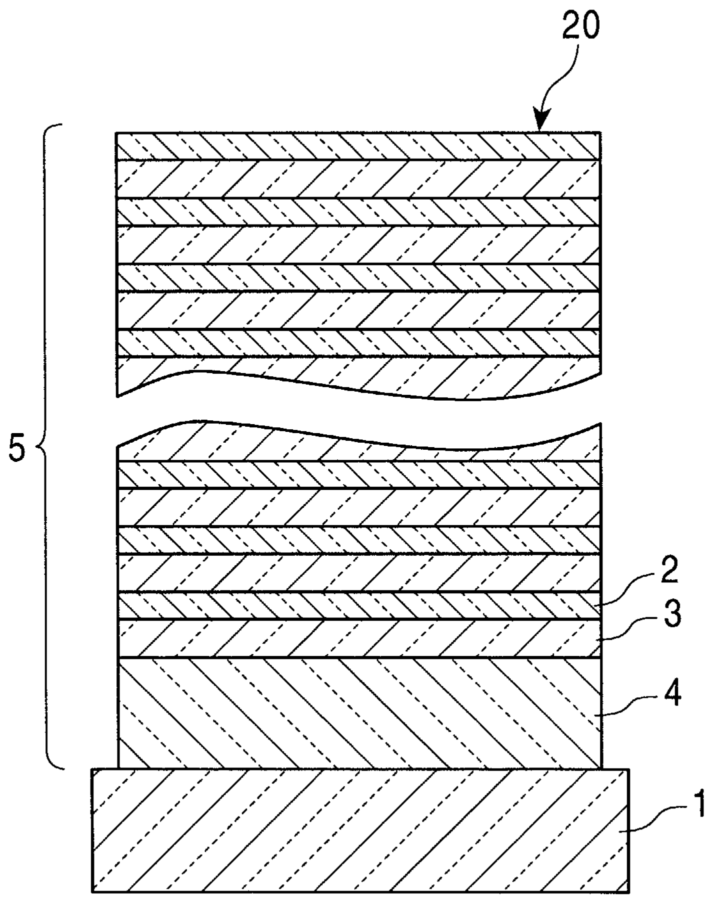

FIG. 2A

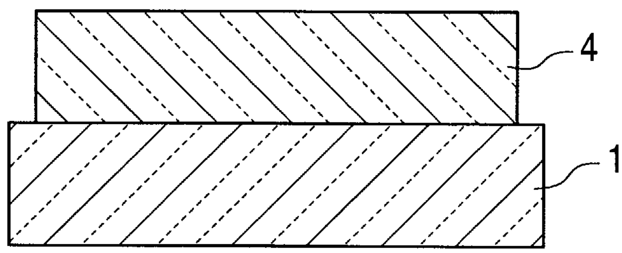


FIG. 2B

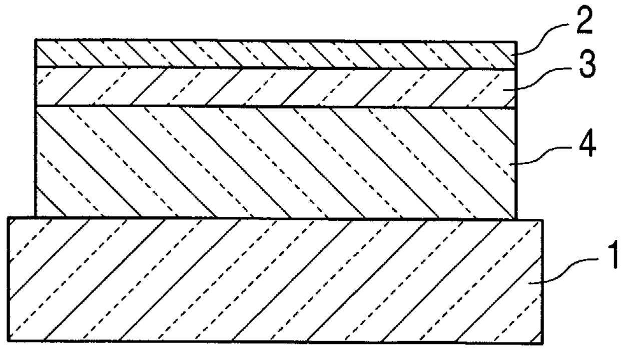

FIG. 3

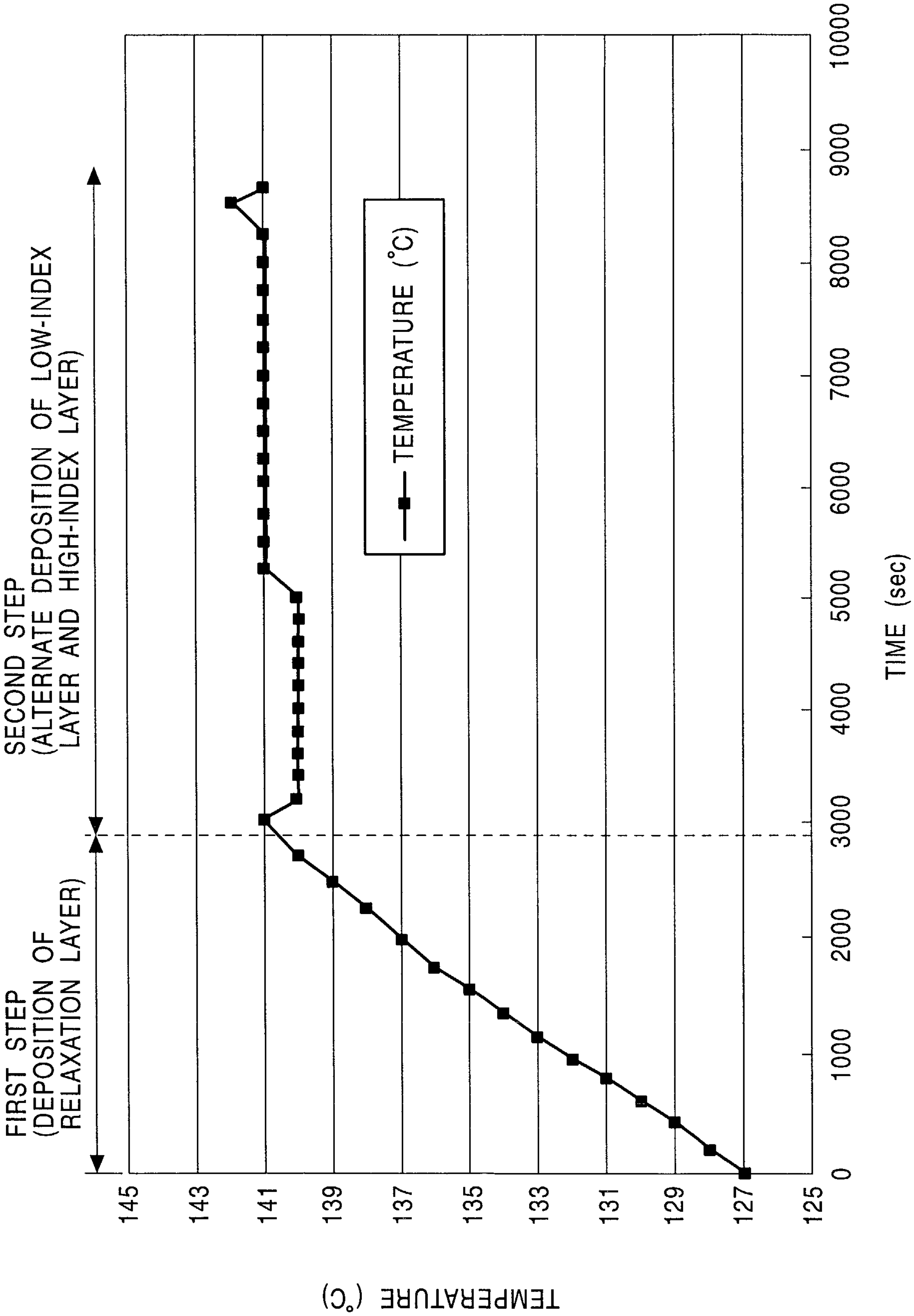
FIRST STEP
(DEPOSITION OF
RELAXATION LAYER)
SECOND STEP
(ALTERNATE DEPOSITION OF LOW-INDEX
LAYER AND HIGH-INDEX LAYER)
TEMPERATURE (°C)
145
143
141
139
137
135
133
131
129
127
125
0
1000
2000
3000
4000
5000
6000
7000
8000
9000
10000
TIME (sec)
TEMPERATURE (°C)

FIG. 4

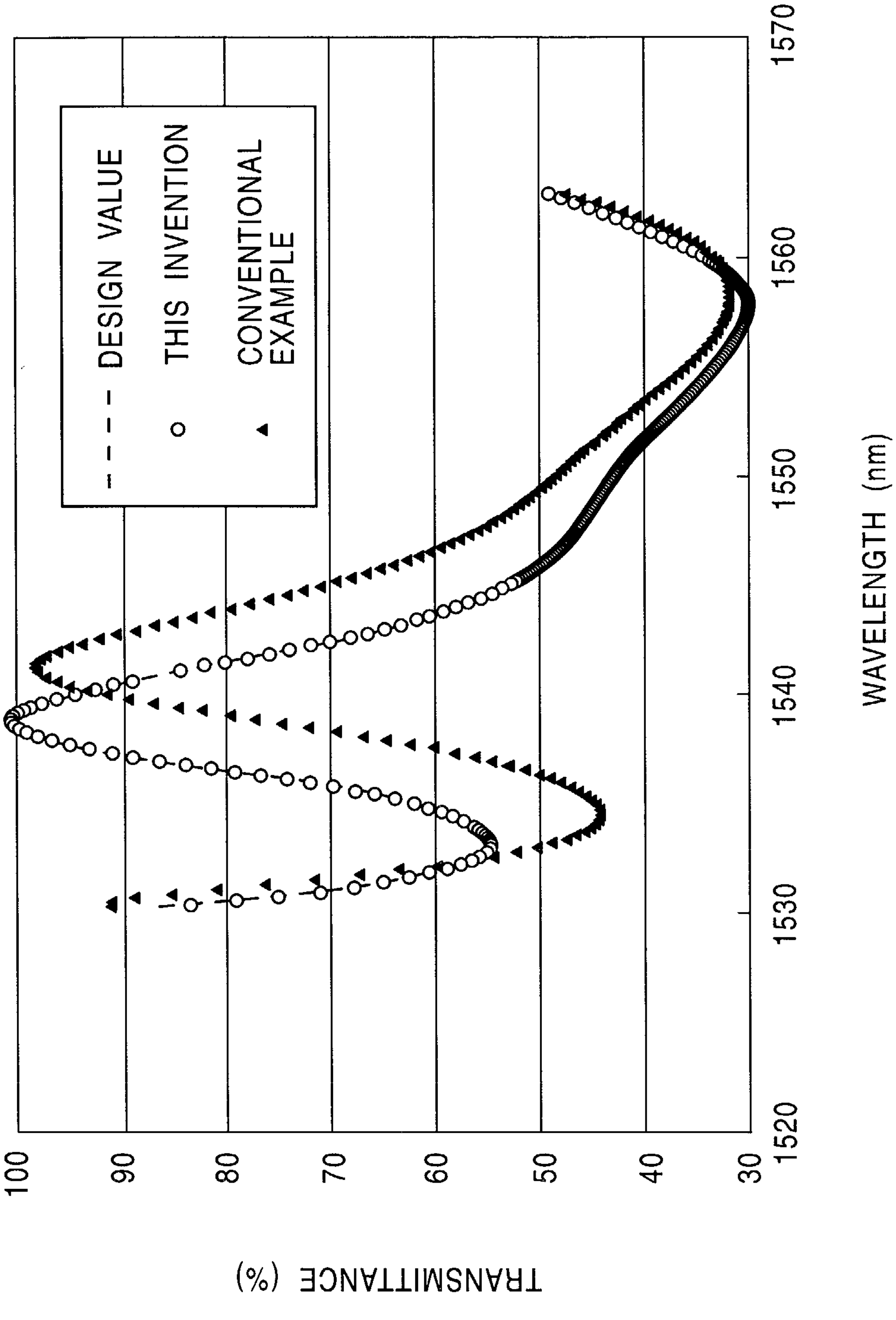
DESIGN VALUE
THIS INVENTION
CONVENTIONAL EXAMPLE
TRANSMITTANCE (%)
100
90
80
70
60
50
40
30
1520
1530
1540
1550
1560
1570
WAVELENGTH (nm)

FIG. 5

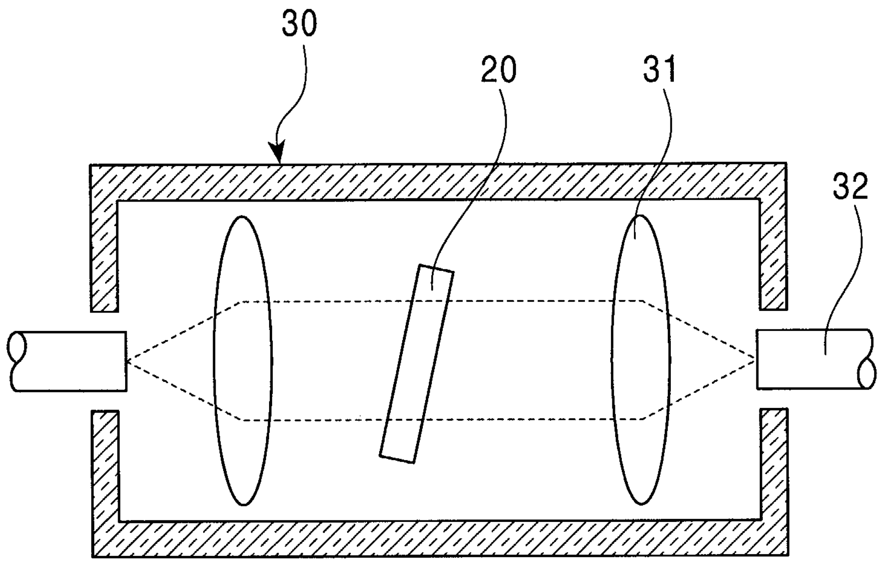


FIG. 6

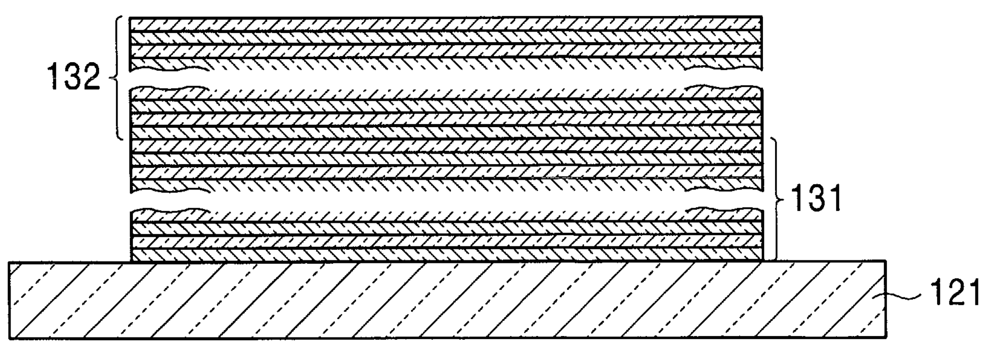

FIG. 7

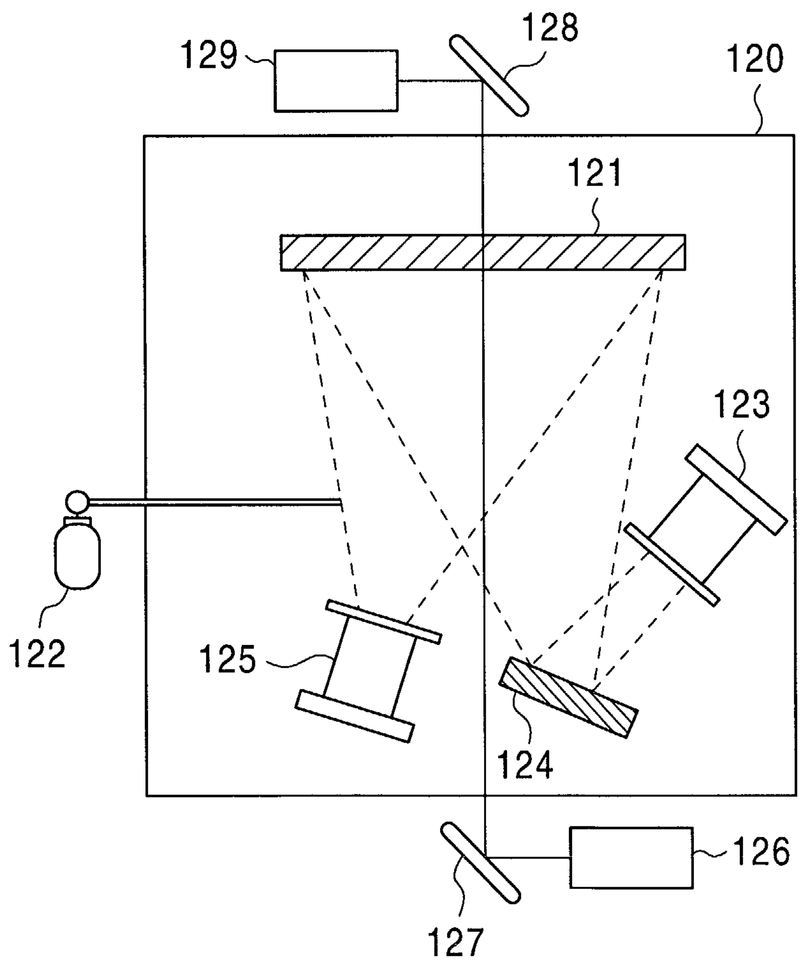

FIG. 8

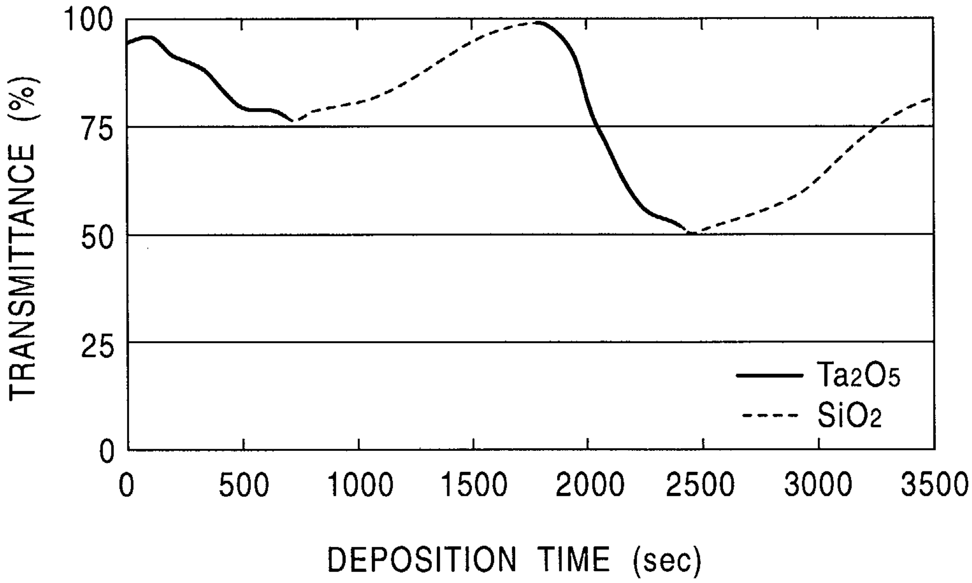
100
75
50
25
0
TRANSMITTANCE (%)
0
500
1000
1500
2000
2500
3000
3500
DEPOSITION TIME (sec)
Ta2O5
SiO2

FIG. 9A

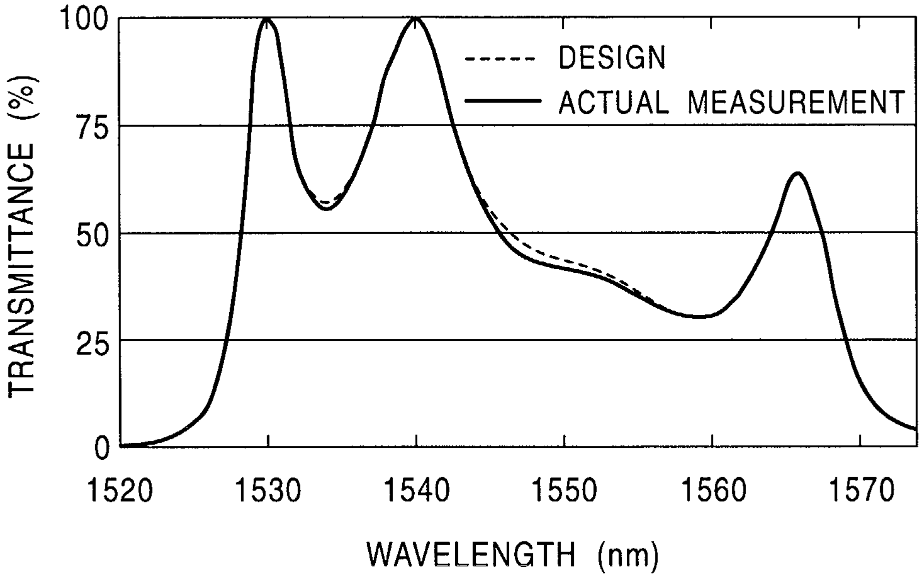
100
75
50
25
0
TRANSMITTANCE (%)
1520
1530
1540
1550
1560
1570
WAVELENGTH (nm)
DESIGN
ACTUAL MEASUREMENT

FIG. 9B

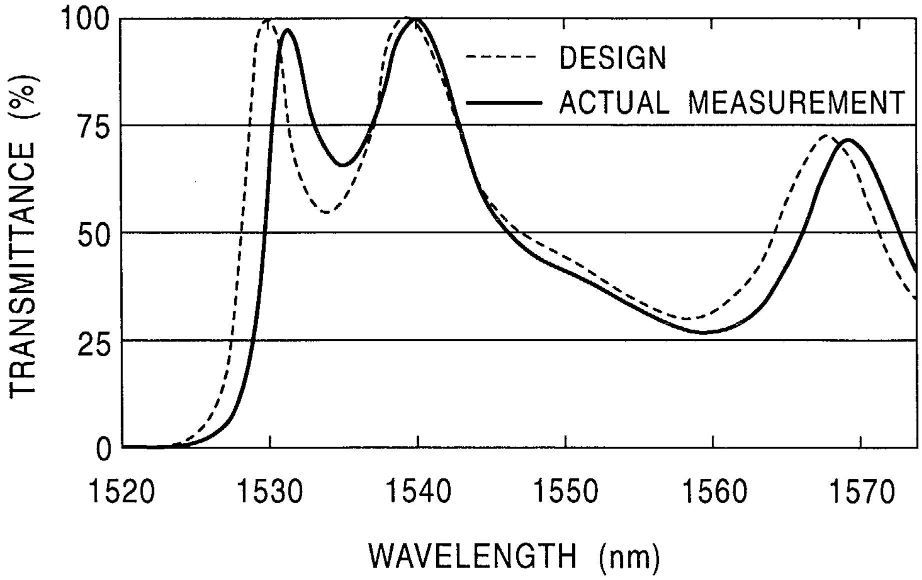
100
75
50
25
0
TRANSMITTANCE (%)
1520
1530
1540
1550
1560
1570
WAVELENGTH (nm)
DESIGN
ACTUAL MEASUREMENT

FIG. 10A

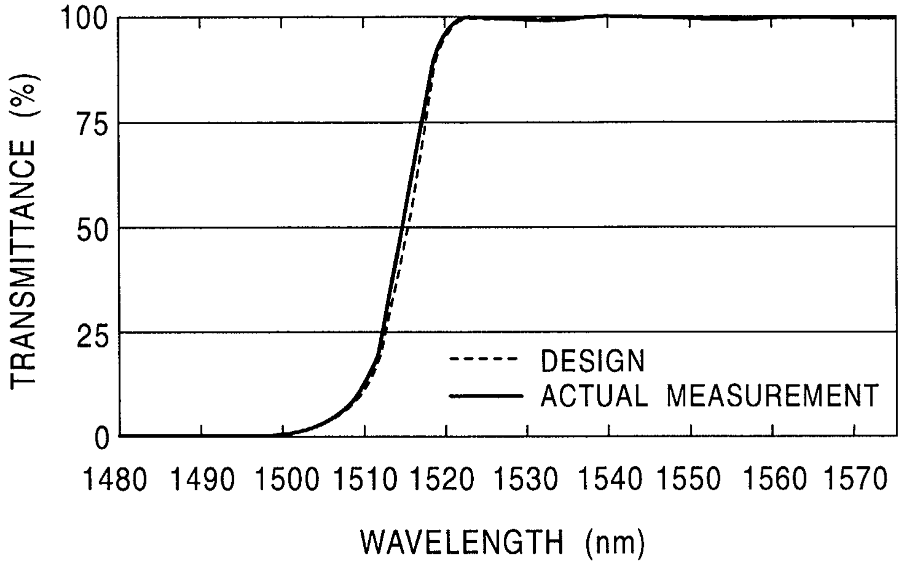


FIG. 10B

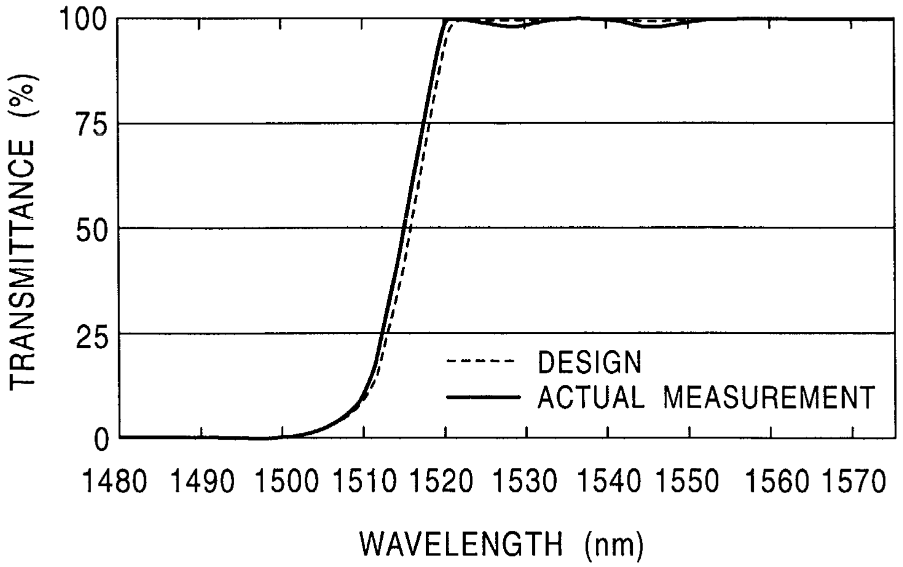

FIG. 11

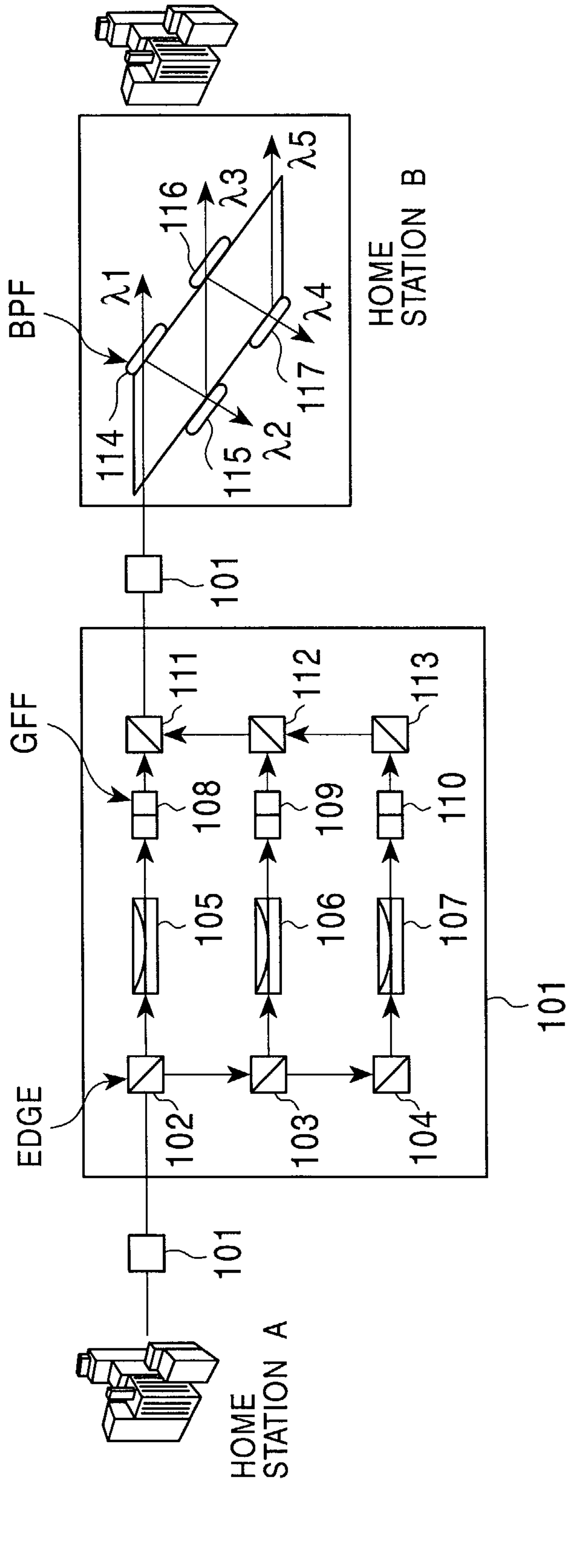
HOME STATION A
101
EDGE
102
103
104
105
106
107
GFF
108
109
110
111
112
113
101
101
BPF
114
115
116
117
λ1
λ2
λ3
λ4
λ5
HOME STATION B

FIG. 12
PRIOR ART

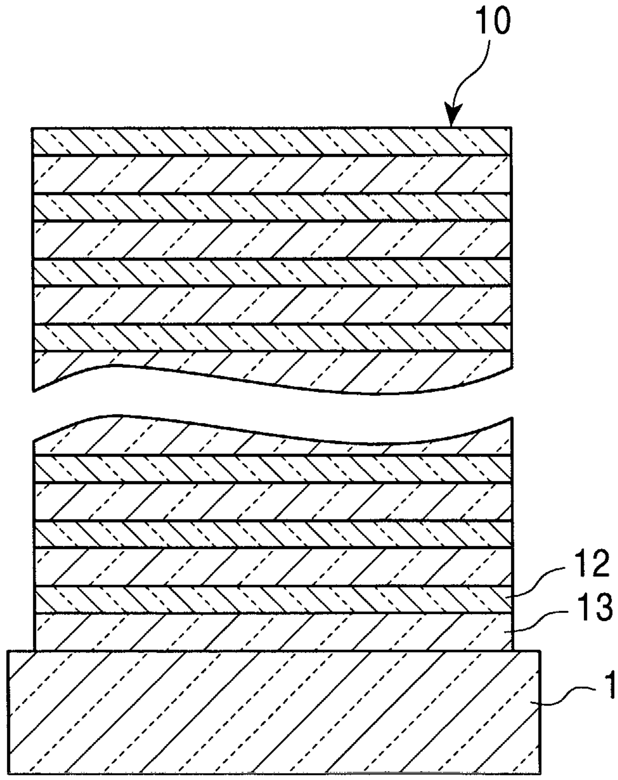

FIG. 13A
PRIOR ART

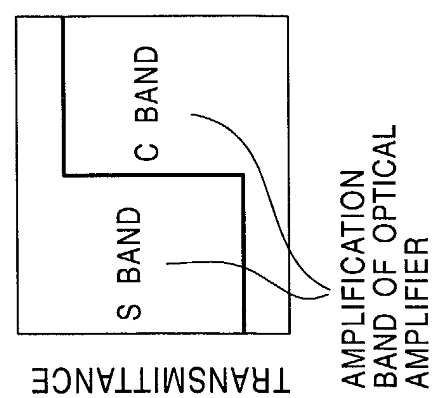


FIG. 13B
PRIOR ART

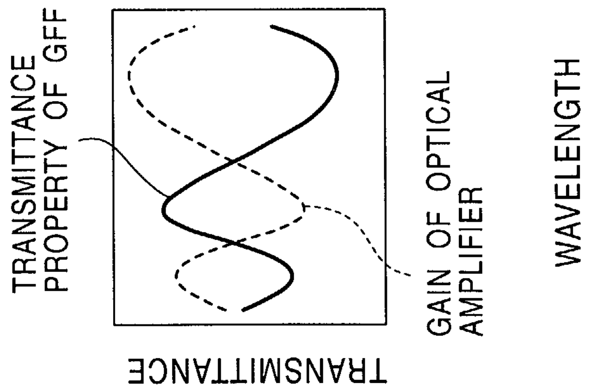


FIG. 13C
PRIOR ART

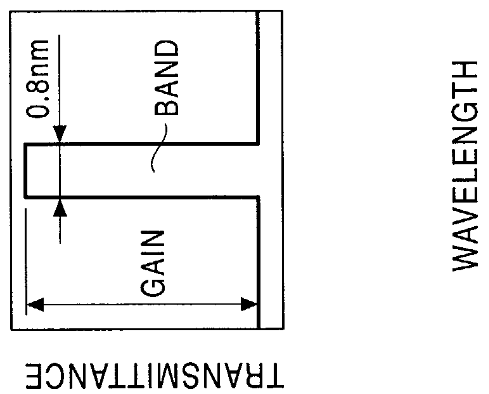

FIG. 14A
PRIOR ART

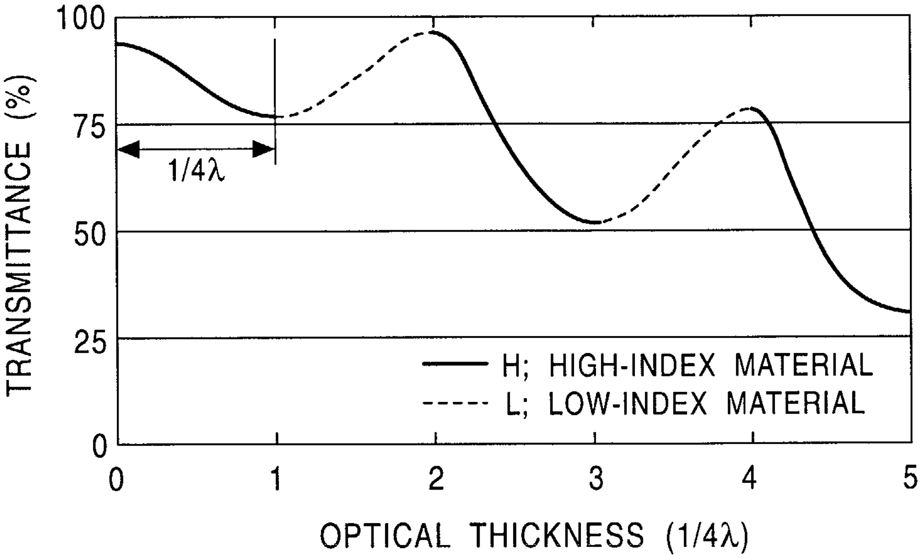


FIG. 14B
PRIOR ART

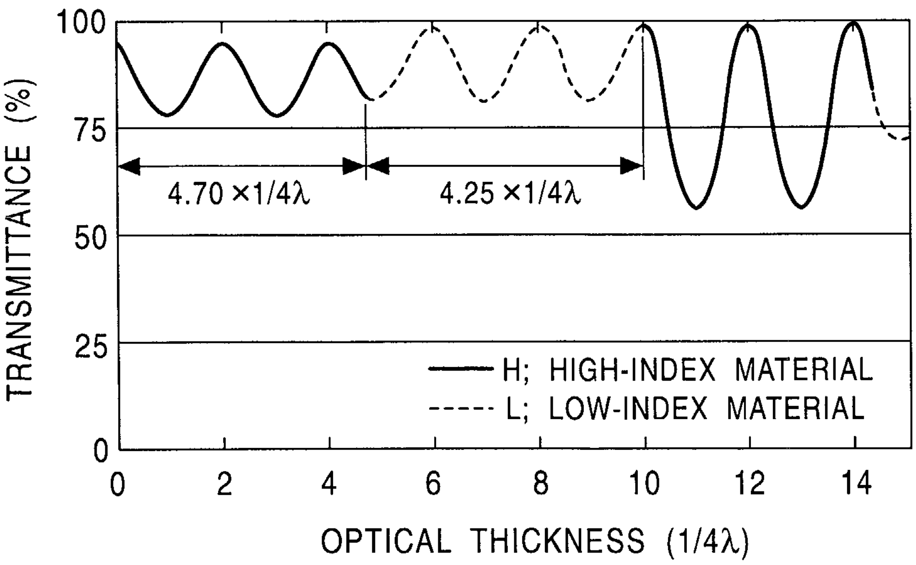

FIG. 15
PRIOR ART